# EUROPEAN PATENT SPECIFICATION

(11) **EP 2 261 767 B1**
(45) Date of publication and mention of the grant of the patent: **09.05.2012**
(21) Application number: 10182368.0
(22) Date of filing: 07.07.2005
(51) Int. Cl.: G06F 1/16, G08B 13/14

(54) **Carrying case for a handheld device and methods thereof**
Behälter für tragbares Gerät und Verfahren zu seiner Bedienung
Etui pour un dispositif portable et méthode de fonctionnement

(43) Date of publication of application: 15.12.2010
(62) Divisional of application: 05106171.1
(73) Proprietor: RESEARCH IN MOTION LIMITED, Waterloo, Ontario N2L 3W8 (CA)
(72) Inventor: Kassiedass, Sanathan, Waterloo, Ontario N2L 5Z5 (CA)
(74) Representative: Moore, Barry

(56) References cited:
- US-A- 5 635 959
- US-A- 5 757 271
- US-A- 6 133 830
- US-A1- 2004 070 499
- US-A1- 2004 085 209
- US-B1- 6 674 358

## Description

Small wireless communication devices, for example cellular phones, smartphones, pagers, push-to-talk devices, and the like, are becoming increasingly common. They may store private and business contact details, important data, passwords, banking information, photographs, appointments, schedules and deadlines, etc. Some of the possible implications and complications that may result from the loss of such a device include identity theft, the loss of corporate secrets, and the expense of buying a replacement.

US2004/0070499 discloses a loss prevention system that includes a portable electronic device and its retaining device. If the removal of the electronic device is unintentional as determined by the electronic device's lost device detection circuit, the user is alerted.

US6113830 discloses that several known devices may trigger an alarm when two units such as a detector unit and a transmitter unit are separated by more than a preset distance or that other known devices may trigger an alarm when a motion sensing device detects movement of the protected article.

US2004/0085209 discloses a portable apparatus that tracks an object and that an alarm is generated if a determined distance between a transmitter and a receiver exceeds a preset value.

US5635959 discloses an information-processing device equipped with a cordless pen. The device includes a pen storing portion for storing the cordless pen. However, if no cordless pen is stored, a central processing unit measures a time from the last input through a keyboard input device or pen input device up to a next input. If an input is made within a predetermined time stored in advance in the main memory, or in other words, if a long time has not passed, normal operations follow. On the other hand, if no input is made after the passage of the predetermined time or a long time has passed, the display device displays a warning message that the cordless pen is not stored in place and in synchronization with this warning the speaker sounds an alarm.

US 6674358 discloses a holster for a telecommunication device. The holster includes a self-contained power source for driving an alert and a detector. The detector detects the presence and unseating of a telecommunication device that is insertable into the holster. The alert is coupled to the detector and is operable to alert to a user when the telecommunication device is removed from the holster. A user operable control or switch can be provided to silence or activate the alert. Alternatively, an additional sensor in the holster is used to detect activation of the device and replaces the function of the switch. Once the alert is silenced or prevented from sounding, the alert will not be sounded in the future unless the device is first returned to the holster.

### GENERAL

A user of a handheld device may be alerted to a possible risk of losing the handheld device. The handheld device is able to be secured to a carrying case. The carrying case may alert the user by activating one or more of its user interface elements. The handheld device may determine that a trigger condition has been met and transmit a signal indicating this to the carrying case. The carrying case may itself determine that a trigger condition has been met. The handheld device may determine that a trigger condition has been met and may alert the user by activating one or more of its user interface elements. The handheld device and the carrying case may communicate via a wireless communication link according to a communication protocol, for example, a Bluetooth® standard, an RFID (Radio Frequency Identification) standard, a Zigbee™ standard or an ultra wideband (UWB) standard.

### BRIEF DESCRIPTION OF THE DRAWINGS

Details of the technology are illustrated by way of example and not limitation in the figures of the accompanying drawings, in which like reference numerals indicate corresponding, analogous or similar elements, and in which:

FIG. 1 is a simplified illustration of an exemplary wireless communication device and an exemplary carrying case for that wireless communication device, according to some examples of the technology;

FIG. 2 is a simplified block diagram of an exemplary handheld device, according to some examples of the technology;

FIG. 3 is a simplified block diagram of an exemplary carrying case for a handheld device, according to some examples of the technology;

FIG. 4 is a flowchart of an exemplary method in a handheld device for causing a carrying case of the handheld device to alert a user of the handheld device of a possible risk of losing the handheld device, according to an example of the technology; and

FIG. 5 is a flowchart of an exemplary method in a carrying case for a handheld device for alerting a user of the handheld device of a possible risk of losing the handheld device, according to an example of the technology.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION

In the following detailed description, numerous specific details are set forth in order to provide a thorough understanding of examples of the technology. However it will be understood by those of ordinary skill in the art that the examples of the technology may be practiced without these specific details. In other instances, well-known methods, procedures, components and circuits have not been described in detail so as not to obscure the examples of the technology.

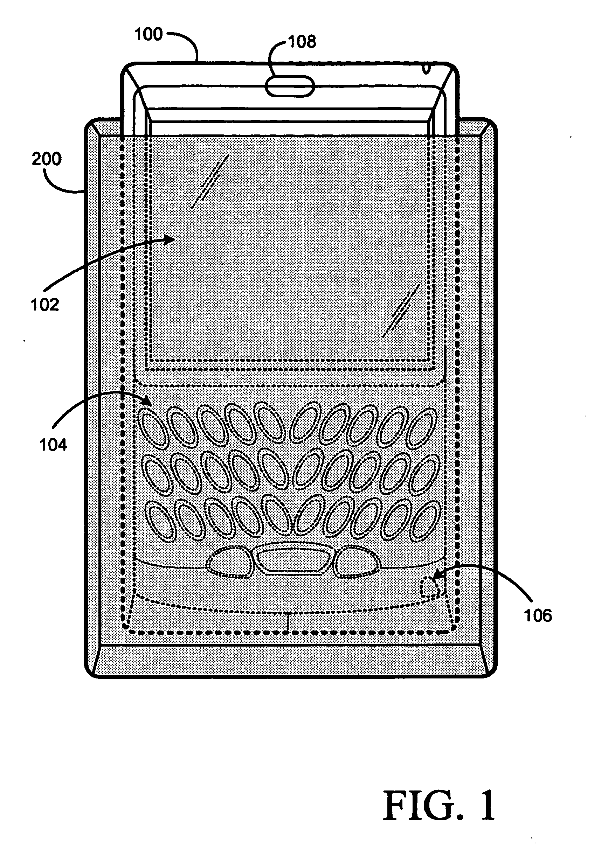

FIG. 1 is a simplified illustration of an exemplary handheld device 100 and an exemplary carrying case 200 for handheld device 100, according to some examples of the technology. The mechanical features of device 100 and carrying case 200, as shown in FIG. 1, are exemplary, and handheld devices and carrying cases having different mechanical features are also contemplated. For example, device 100 is shown inserted into carrying case 200; however, other means for securing a handheld device and a carrying case are also contemplated.

In this example, device 100 includes a display 102 and a keyboard 104. Keyboard 104 may be embedded in full or in part within display 102, i.e. display 102 may be a "touch screen". In this example, device 100 also includes an audio input element 106, for example a microphone, and an audio output element 108, for example a speaker. However, examples of this technology are equally applicable to handheld devices not having one or more of a display, a keyboard, an audio input element and an audio output element. Device 100 may include other user interface elements that are not shown for clarity.

A user may secure carrying case 200 to a personal item worn on the body, for example a belt or other clothing item, or may store carrying case 200 inside a personal item carried by the user, for example a bag, knapsack or purse. A user may secure device 100 to carrying case 200 and may remove device 100 from carrying case 200 from time to time in order to operate device 100 or for any other reason. The user might forget to secure device 100 to carrying case 200 afterward, and as a result, it is possible that the user might lose device 100, for example, by leaving it behind when the user moves to another place.

According to some examples of the technology, if one or more conditions are met, carrying case 200 and/or device 100 may be triggered to alert the user of a possible risk of losing device 100. The one or more conditions may be predefined or programmable. Carrying case 200 may alert the user by activating one or more user interface elements included in carrying case 200. Similarly, device 100 may alert the user by activating one or more user interface elements included in device 100. A non-exhaustive list of examples for such user interface elements includes a vibrator, a sound source, a light source, and any other suitable user interface element.

The following is a non-exhaustive list of examples for conditions that may trigger carrying case 200 and/or device 100 to alert the user. An embodiment of the invention is given by condition (3). The claims are directed to condition 3.

(1) Handheld device 100 is not secured to carrying case 200, and its distance from carrying case 200 is more than a predefined or programmable distance. As shown hereinbelow, handheld device 100 and carrying case 200 may include means to communicate with one another. A communication link may be established between handheld device 100 and carrying case 200, for example, immediately after handheld device 100 is removed from carrying case 100.

According to some examples of the technology, if handheld device 100 becomes out of range of carrying case 200, carrying case 200 may be triggered to alert the user. According to some other examples of the technology, carrying case 200 may be able to measure the strength of signals originating from handheld 100 and to determine according to those measurements whether to alert the user or not.

According to some other examples of the technology, handheld device 100 may be able to measure the strength of signals originating from carrying case 200 and to determine according to those measurements whether to alert the user or not. If handheld device 100 concludes the user should be alerted, handheld device 100 may be triggered to alert the user and/or may trigger carrying case 200 to alert the user by transmitting an appropriate signal to carrying case 200 over a wireless communication link. One exemplary measurement that can be used in handheld device 100 and/or carrying case 200 for measuring the strength of signals is known as RSSI (Received Signal Strength Indication).

(2) Handheld device 100 is not secured to carrying case 200 and at least a predefined or programmable amount of time has passed since handheld device 100 was last removed from carrying case 200. According to some examples of the technology, carrying case 200 may include a timer implemented in hardware, software or a combination thereof. The timer may count time from the moment handheld device 100 is removed from carrying case 200 and may trigger carrying case 200 to alert the user if a predefined or programmable amount of time has passed. Carrying case 200 may reset the timer once handheld device 100 is returned to carrying case 200.

According to some other examples of the technology, handheld device 100 may include a timer implemented in hardware, software or a combination thereof. The timer may count time from the moment handheld device 100 is removed from carrying case 200, and if a predefined or programmable amount of time has passed, handheld device 100 may be triggered to alert the user and/or may trigger carrying case 200 to alert the user by transmitting an appropriate signal to carrying case 200 over a wireless communication link. Handheld device 100 may reset the timer once handheld device 100 is returned to carrying case 200.

(3) Handheld device 100 is not secured to carrying case 200 and at least a predefined or programmable amount of time has passed since handheld device 100 was last removed from carrying case 200 without the user activating handheld device 100. As recited in the claims According to the invention handheld device 100 may include a timer implemented in hardware, software or a combination thereof. The timer may count time from the moment handheld device 100 is removed from carrying case 200 and may terminate the counting if the user activates handheld device 100. Handheld device 100 may stop and/or reset the timer once the user activates handheld device 100 or returns handheld device 100 to carrying case 200.

For example, the user may activate handheld device 100 by pressing a key of keyboard 104, by activating any other electro-mechanical switch included in handheld device 100, or by actively participating in a communication session involving handheld device 100. If a predefined or programmable amount of time passes without a user activating handheld device 100, handheld device 100 may be triggered to alert the user and/or may trigger carrying case 200 to alert the user by transmitting an appropriate signal to carrying case 200.

(4) Handheld device 100 is not secured to carrying case 200 and at least a predefined or programmable amount of time has passed since the last activation of handheld device 100 without the user re-activating handheld device 100. According to some examples of the technology, handheld device 100 may include a timer implemented in hardware, software or a combination thereof. The timer may start (or restart) counting time at activations of handheld device 100. A non-exhaustive list of examples for activation of handheld device 100 includes termination of a communication session involving handheld device 100, activation of a key or another electro-mechanical element included in handheld device 100, and any other suitable activation of handheld device 100.

The counting may be terminated and re-started if another activation of handheld device 100 occurs. If a predefined or programmable amount of time has passed since the most recent activation of handheld device 100, handheld device 100 may be triggered to alert the user and/or may trigger carrying case 200 to alert the user by transmitting an appropriate signal to carrying case 200.

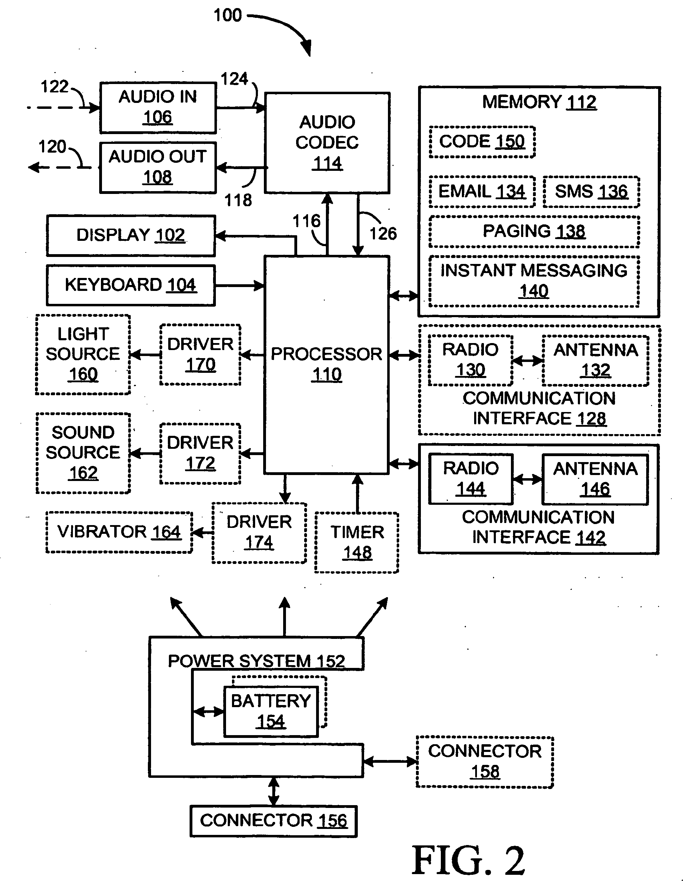

FIG. 2 is a simplified block diagram of exemplary handheld device 100, according to some examples of the technology. Handheld device 100 includes a processor 110 and a memory 112. Memory 112, keyboard 104 and display 102 are coupled to processor 110. Handheld device 100 includes an audio coder-decoder (codec) 114 coupled to audio input element 106, audio output element 108 and processor 110.

Codec 114 may be able to receive a digital representation 116 of sound waves from processor 110 and to output a corresponding analog signal 118 to audio output device 108. Audio output device 108 may be able to receive analog signal 118 and to output sound waves 120 corresponding to analog signal 118. In addition, audio input element 106 may be able to receive sound waves 122 and to output a corresponding analog signal 124 to codec 114. Codec 114 may be able to receive analog signal 124 and to output a digital representation 126 of analog signal 124 to processor 110.

Handheld device 100 may optionally include a wireless communication interface 128, compatible with a wireless communication protocol, coupled to processor 110 and including at least a radio 130 and an antenna 132. By way of wireless communication interface 128 and a communication infrastructure (not shown) that is external to handheld device 100, handheld device 100 may be able to establish communication sessions with other devices (not shown).

Alternatively, a communication device (not shown) belonging to a different user may initiate a communication session to handheld device 100. Handheld device 100 may receive a notification about the initiated communication session from a communication infrastructure (not shown) that is external to handheld device 100. Handheld device 100 may notify its user about the incoming communication session, and the user may or may not receive the telephone communication session.

A non-exhaustive list of examples for communication sessions includes telephone communication sessions, sending and receiving electronic mail (Email), sending and receiving instant messages, sending and receiving paging messages, sending and receiving short message service (SMS) messages, and any other suitable communication sessions.

For types of communication sessions supported by handheld device 100, memory 112 may store respective software modules to be executed by processor 110, for example, an Email software module 134, an SMS software module 136, a paging software module 138 and an instant messaging software module 140.

Handheld device 100 includes a secondary communication interface 142, compatible with a wireless communication protocol that is different from the wireless communication protocol that communication interface 128 is compatible with. Communication interface 142 may be coupled to processor 110 and may include at least a radio 144 and an antenna 146.

For example, handheld device 100 may be "Bluetooth®-enabled", and communication interface 142 may comply with Bluetooth® core specifications v1.1, published February 22, 2001 by the Bluetooth® special interest group (SIG) and/or with Bluetooth® core specifications v1.2, published November 5, 2003. However, it will be obvious to those of ordinary skill in the art how to modify the following for other existing Bluetooth® standards or future related standards. Alternatively, communication interface 142 may comply with any other suitable protocol, for example Zigbee™, RFID (Radio Frequency Identification), ultra wideband (UWB), or a proprietary communication protocol.

By way of communication interface 142, handheld device 100 may be able to communicate with other devices that comply with the same protocol as communication interface 142. For example, handheld device 100 may communicate with carrying case 200 by way of communication interface 142.

Handheld device 100 may optionally include a timer 148 that is implemented in hardware, software, or a combination thereof. Memory 112 may optionally include code 150 that, when executed by processor 110, determines whether any of the trigger conditions have been met. In addition, code 150 may be able to control timer 148.

Handheld device 100 includes a power system 152, one or more batteries 154, and a connector 156, both coupled to power system 152. Connector 156 can be connected to an external power source (not shown) that can provide power for charging batteries 154 and/or for operating handheld device 100. Power system 152 provides electrical coupling between the external power source and batteries 154, and provides electrical coupling between batteries 154 and the electrical components of handheld device 100 (i.e. processor 110, memory 112, and the like). As part of the electrical coupling between the external power source and battery 154, power system 152 may control the charging of batteries 154 with electrical charge drawn from the external power source.

A non-exhaustive list of examples for batteries 154 includes Ni-Cd (Nickel Cadmium) batteries, Ni-MH (Nickel-Metal Hydride) batteries, Lithium Ion batteries, rechargeable Alkaline batteries, and any other suitable batteries.

Handheld device 100 may optionally include a connector 158 coupled to power system 152 to provide power to carrying case 200, as described hereinbelow.

In addition to display 102, keyboard 104, audio input element 106 and audio output element 108, handheld device 100 may includes one or more additional user interface elements, for example, a light source 160, a sound source 162 and a vibrator 164, and may include respective electrical drivers 170, 172 and 174. Light source 160 may be, for example a LED (Light Emitting Diode) or a lamp. Sound source 162 may be, for example, a speaker or a buzzer. Vibrator 164 may be, for example, an eccentric vibrator motor. By way of drivers 170, 172 and 174, processor 110 may be able to activate light source 160 and/or sound source 162 and/or vibrator 164, respectively, to alert a user if any of the trigger conditions are met. Audio output element 108 may be used instead of sound source 162 to alert the user if any of the trigger conditions are met.

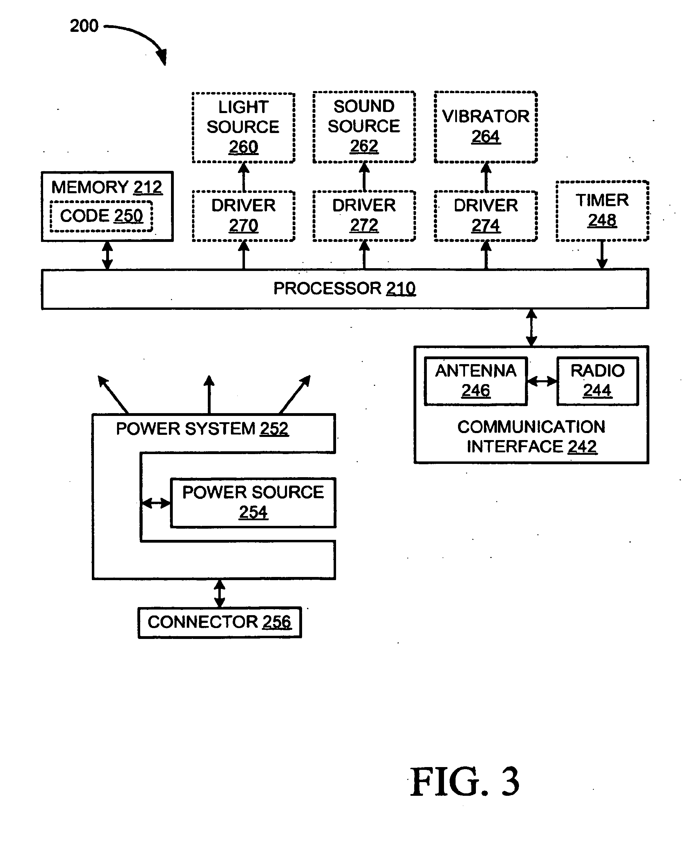

FIG. 3 is a simplified block diagram of exemplary carrying case 200, according to some examples of the technology. Carrying case 200 includes a processor 210 and a memory 212 coupled to processor 210. Carrying case 200 includes a wireless communication interface 242, compatible with the same wireless communication protocol as wireless communication interface 142 of handheld device 100. Wireless communication interface 242 may be coupled to processor 210 and may include at least a radio 244 and an antenna 246. By way of communication interface 242, carrying case 200 may be able to communicate with other devices that comply with the same protocol as communication interface 242. For example, carrying case 200 may communicate with handheld device 100 by way of communication interface 242.

Carrying case 200 includes one or more user interface elements, for example, a light source 260, a sound source 262 and a vibrator 264, and may include respective electrical drivers 270, 272 and 274. Light source 260 may be, for example a LED (Light Emitting Diode) or a lamp. Sound source 262 may be, for example, a speaker or a buzzer. Vibrator 264 may be, for example, an eccentric vibrator motor. By way of drivers 270, 272 and 274, processor 210 may be able to activate light source 260 and/or sound source 262 and/or vibrator 264, respectively, to alert a user if any of the trigger conditions are met.

Carrying case 200 may optionally include a timer 248 that is implemented in hardware, software, or a combination thereof Memory 212 may optionally include code 250 that, when executed by processor 210, determine whether any of the trigger conditions have been met. In addition, code 150 of handheld device 100 may be able to control timer 250.

Carrying case 200 includes a power system 252, a power source 254, and a connector 256, both coupled to power system 252. Connector 256 can be connected to an external power source, that may be, for example, connector 158 of handheld device 100, that can provide power for charging power source 254.

Power system 252 provides electrical coupling between the external power source and power source 254, and provides electrical coupling between power source 254 and the electrical components of carrying case 200 (i.e. processor 210, memory 212, and the like). As part of the electrical coupling between the external power source and power source 254, power system 252 may control the charging of power source 254 with electrical charge drawn from the external power source.

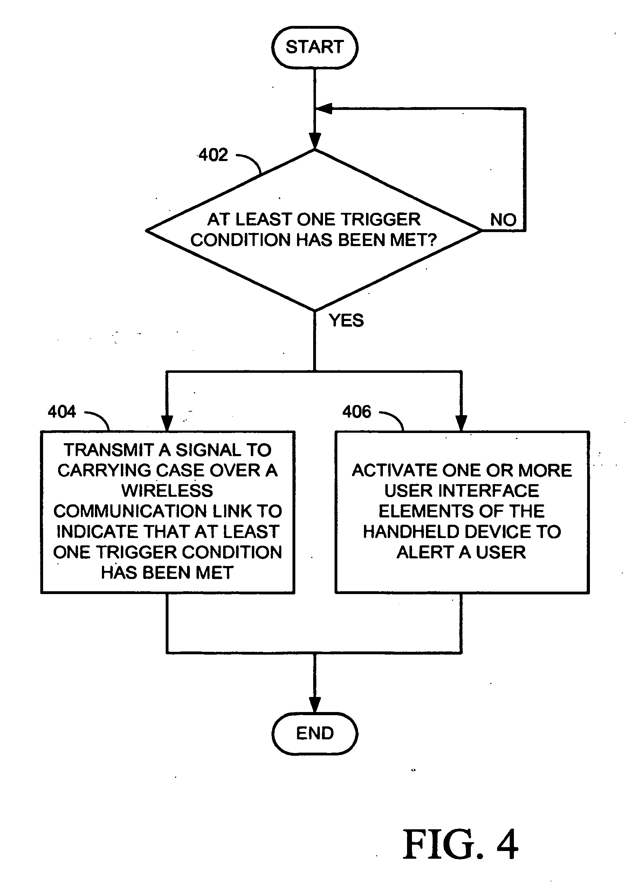

FIG. 4 is a flowchart of an exemplary method in handheld device 100 for causing carrying case 200 to alert a user of handheld device 100 of a possible risk of losing handheld device 100, according to an example of the technology. Handheld device 100 may check whether at least one trigger condition has been met (402), and if at least one trigger condition has been met, handheld device 100 may transmit a signal to carrying case 200 to indicate that at least one trigger condition has been met (404) and/or may activate one or more user interface elements of handheld device 100 in order to alert the user (406). Various situations in which handheld device 100 may determine that one or more trigger conditions have been met are described hereinabove.

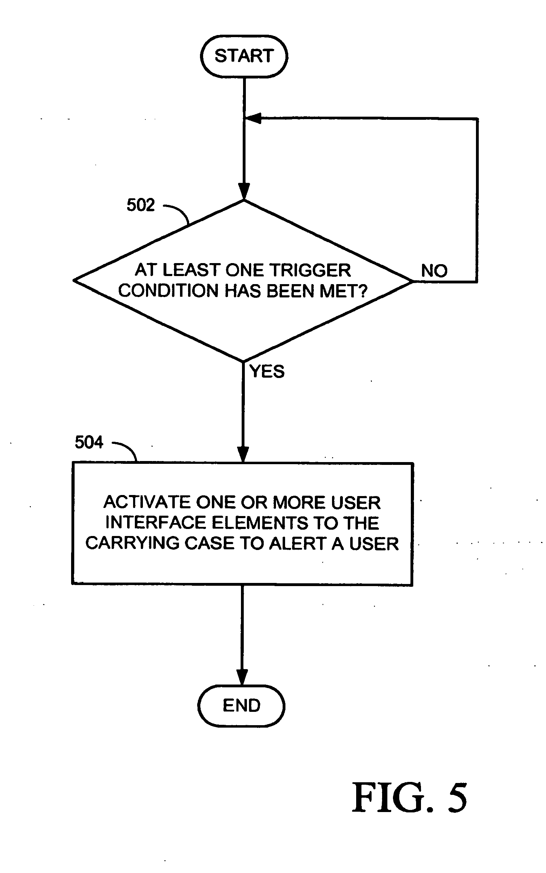

FIG. 5 is a flowchart of an exemplary method in carrying case 200 to alert a user of handheld device 100 of a possible risk of losing handheld device 100, according to an example of the technology. Carrying case 200 may check whether at least one trigger condition has been met (502), and if at least one trigger condition has been met, carrying case 200 may activate one or more user interface elements of carrying case 200 in order to alert the user (504). As explained hereinabove, carrying case 200 may receive a signal from handheld device 100 indicating that a trigger condition has been met. Various situations in which carrying case may determine that one or more trigger conditions have been met are described hereinabove.

A non-exhaustive list of examples for power source 254 includes one or more Ni-Cd batteries, one or more Ni-MH batteries, one or more Lithium Ion batteries, one or more rechargeable Alkaline batteries, one or more capacitors, one or more super-capacitors, and any other suitable power source.

A non-exhaustive list of examples for handheld device 100 includes a cellular phone, a smart phone, a pager, a push-to-talk device, a personal digital assistant (PDA), an MP3 (Moving Picture Experts Group Layer-3 Audio) player, an electronic mail (Email) client, a gaming device, a wireless terminal, and any other suitable small wireless-enabled electronic device.

A non-exhaustive list of examples for standards with which wireless communication interface 128 may comply includes Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

Alternatively, handheld device 100 may be "802.11-enabled", and wireless communication interface 128 may comply with one or more of the following standards defined by the Institute of Electrical and Electronic Engineers (IEEE) for Wireless LAN MAC and Physical layer (PHY) specifications:

| **Standard** | **Published** | **Maximum Speed** | **Frequency** | **Modulation** |
|---|---|---|---|---|
| 802.11 | 1997 | 2 Mbps | 2.4 GHz | Phase-Shift |
| 802.11a | 1999 | 54 Mbps | 5.0 GHz | Orthogonal Frequency |
| | | | | Division Multiplexing |
| 802.11b | 1999 | 11 Mbps | 2.4 GHz | Complementary Code Keying |
| 802.11g | 2003 | 54 Mbps | 2.4 GHz | Orthogonal Frequency |
| | | | | Division Multiplexing |

However, it will be obvious to those of ordinary skill in the art how to modify the following for other existing WLAN standards or future related standards, including 802.11n.

A non-exhaustive list of examples for processors 110 and 210 includes microprocessors, microcontrollers, central processing units (CPU), digital signal processors (DSP), reduced instruction set computers (RISC), complex instruction set computers (CISC) and the like. Furthermore, any of processors 110 and 210 may comprise more than one processing unit, may be part of an application specific integrated circuit (ASIC) or may be a part of an application specific standard product (ASSP).

A non-exhaustive list of examples for memories 112 and 212 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antennae 132, 146 and 246 includes dipole antennae, monopole antennae, multilayer ceramic antennae, planar inverted-F antennae, loop antennae, shot antennae, dual antennae, omnidirectional antennae and any other suitable antennae.

While certain features of the technology have been illustrated and described herein, many modifications, substitutions, changes, and equivalents will now occur to those of ordinary skill in the art. It is, therefore, to be understood that the appended claims are intended to cover all such modifications and changes.

Furthermore, one or more of the following numbered clauses may describe and relate to further aspects or features within the context of the present teaching:
1. A method to alert a user of a handheld device (100) and a carrying case (200) for the handheld device of a possible risk of losing the handheld device, the method comprising:
   determining at the handheld device that the handheld device is not secured to the carrying case and that at least a predefined or programmable amount of time has passed since the handheld device was last removed from the carrying case without the handheld device being activated; and
   consequently, transmitting a signal from the handheld device to the carrying case over a wireless communication link to cause the carrying case to activate at least one of its user interface elements (260, 262, 264) in order to alert the user to the risk.
2. The method of clause 1, further comprising:
   activating a user interface element (160, 162, 164, 108) of the handheld device in order to alert the user to the risk.
3. The method of clause 1 or clause 2, wherein determining that at least the predefined or programmable amount of time has passed since the handheld device was last removed from the carrying case without the handheld device being activated includes:
   determining that no electro-mechanical switch (104) comprised in the handheld device has been activated for at least the predefined or programmable amount of time since the handheld device was last removed from the carrying case.
4. The method of any one of clauses 1 to 3, wherein determining that at least the predefined or programmable amount of time has passed since the handheld device was last removed from the carrying case without the handheld device being activated includes:
   determining that the user has not participated in any communication session using the handheld device for at least the predefined or programmable amount of time since the handheld device was last removed from the carrying case.
5. A handheld device (100) comprising:
   a wireless communication interface (142) through which the handheld device (100) is able to communicate with a carrying case (200);
   a processor (110);
   a memory (112); and
   a power source (154) to provide power to the processor (110), the memory (112) and the communication interface (142),
   wherein the memory (112) is arranged to store executable code means (150) that, when executed by the processor (110), determines, in the event that the handheld device is not secured to the carrying case, whether at least a predefined or programmable amount of time has passed since the handheld device was last removed from the carrying case without the handheld device being activated and if so, controls the wireless communication interface to transmit a signal to the carrying case to cause the carrying case to activate at least one of its user interface elements (260, 262, 264) in order to alert a user to a possible risk of losing the handheld device.
6. The handheld device of clause 5, further comprising one or more user interface elements (160, 162, 164, 108) and wherein the executable code means, when executed by the processor, activates one or more of the user interface elements of the handheld device to alert the user to the possible risk.
7. The handheld device of clause 5 or clause 6, further comprising:
   a connector (158) coupled to the power source to provide power to the carrying case while the handheld device is secured to the carrying case.
8. The handheld device of any one of clauses 5 to 7, wherein the wireless communication interface is Bluetooth® compatible and/or RFID (Radio Frequency Identification) compatible and/or Zigbee™ compatible and/or ultra wideband (UWB) compatible.
9. A computer program product for a handheld device (100) to cause a carrying case (200) of the handheld device to alert a user of the handheld device of a possible risk of losing the handheld device, the computer program product comprising a computer readable medium (112) embodying program code means (150) executable by a processor (110) of the handheld device for implementing the method of any one of clauses 1 to 4.
10. A wireless communication system comprising a handheld device (100) according to any one of clauses 5 to 8 and a carrying case (200) for the handheld device.

## Claims

1. A method to alert a user of a handheld device (100) and a carrying case (200) for the handheld device of a possible risk of losing the handheld device, the method comprising:
determining at the handheld device that the handheld device is not secured to the carrying case and that at least a predefined or programmable amount of time has passed since the handheld device was last removed from the carrying case without the handheld device being activated; and
consequently, transmitting a signal from the handheld device to the carrying case over a wireless communication link to cause the carrying case to activate at least one of its user interface elements (260, 262, 264) in order to alert the user to the risk.

2. The method as claimed in claim 1, further comprising:
activating a user interface element (160, 162, 164, 108) of the handheld device in order to alert the user to the risk.

3. The method as claimed in claim 1 or claim 2, wherein determining that at least the predefined or programmable amount of time has passed since the handheld device was last removed from the carrying case without the handheld device being activated includes:
determining that no electro-mechanical switch (104) comprised in the handheld device has been activated for at least the predefined or programmable amount of time since the handheld device was last removed from the carrying case.

4. The method as claimed in any one of claims 1 to 3, wherein determining that at least the predefined or programmable amount of time has passed since the handheld device was last removed from the carrying case without the handheld device being activated includes:
determining that the user has not participated in any communication session using the handheld device for at least the predefined or programmable amount of time since the handheld device was last removed from the carrying case.

5. A handheld device (100) comprising:
a wireless communication interface (142) through which the handheld device (100) is able to communicate with a carrying case (200);
a processor (110);
a memory (112); and
a power source (154) to provide power to the processor (110), the memory (112) and the communication interface (142),
wherein the memory (112) is arranged to store executable code means (150) that, when executed by the processor (110), determines, in the event that the handheld device is not secured to the carrying case, whether at least a predefined or programmable amount of time has passed since the handheld device was last removed from the carrying case without the handheld device being activated and if so, controls the wireless communication interface to transmit a signal to the carrying case to cause the carrying case to activate at least one of its user interface elements (260, 262, 264) in order to alert a user to a possible risk of losing the handheld device.

6. The handheld device as claimed in claim 5, further comprising one or more user interface elements (160, 162, 164, 108) and wherein the executable code means, when executed by the processor, activates one or more of the user interface elements of the handheld device to alert the user to the possible risk.

7. The handheld device as claimed in claim 5 or claim 6, further comprising:
a connector (158) coupled to the power source to provide power to the carrying case while the handheld device is secured to the carrying case.

8. The handheld device as claimed in any one of claims 5 to 7, wherein the wireless communication interface is Bluetooth® compatible and/or RFID (Radio Frequency Identification) compatible and/or Zigbee™ compatible and/or ultra wideband (UWB) compatible.

9. A computer program product for a handheld device (100) to cause a carrying case (200) of the handheld device to alert a user of the handheld device of a possible risk of losing the handheld device, the computer program product comprising a computer readable medium (112) embodying program code means (150) executable by a processor (110) of the handheld device for implementing the method of any one of claims 1 to 4.

10. A wireless communication system comprising a handheld device (100) according to any one of claims 5 to 8 and a carrying case (200) for the handheld device.

## Patentansprüche

1. Verfahren zum Warnen eines Benutzers einer handgehaltenen Vorrichtung (100) und einer Transporttasche (200) für die handgehaltene Vorrichtung über ein mögliches Risiko eines Verlierens der handgehaltenen Vorrichtung, wobei das Verfahren aufweist:
Bestimmen, an der handgehaltenen Vorrichtung, dass die handgehaltene Vorrichtung nicht an der Transporttasche befestigt ist und dass zumindest eine vordefinierte oder programmierbare Zeit vergangen ist, seit die handgehaltene Vorrichtung zuletzt aus der Transporttasche entfernt wurde,
ohne dass die handgehaltene Vorrichtung aktiviert wurde; und
folglich, Senden eines Signals von der handgehaltenen Vorrichtung über eine drahtlose Kommunikationsverbindung an die Transporttasche, um zu veranlassen, dass die Transporttasche zumindest eines ihrer Benutzerschnittstellenelemente (260, 262, 264) aktiviert, um den Benutzer über das Risiko zu warnen.

2. Verfahren gemäß Anspruch 1, das weiter aufweist:
Aktivieren eines Benutzerschnittstellenelements (160, 162, 164, 108) der handgehaltenen Vorrichtung, um den Benutzer über das Risiko zu warnen.

3. Verfahren gemäß Anspruch 1 oder Anspruch 2, wobei das Bestimmen, dass zumindest die vordefinierte oder programmierbare Zeit vergangen ist, seit die handgehaltene Vorrichtung zuletzt aus der Transporttasche entfernt wurde, ohne dass die handgehaltene Vorrichtung aktiviert wurde, umfasst:
Bestimmen, dass kein elektro-mechanischer Schalter (104), der in der handgehaltenen Vorrichtung enthalten ist, für zumindest die vordefinierte oder programmierbare Zeit aktiviert wurde, seit die handgehaltene Vorrichtung zuletzt aus der Transporttasche entfernt wurde.

4. Verfahren gemäß einem der Ansprüche 1 bis 3, wobei das Bestimmen, dass zumindest die vordefinierte oder programmierbare Zeit vergangen ist, seit die handgehaltene Vorrichtung zuletzt aus der Transporttasche entfernt wurde, ohne dass die handgehaltene Vorrichtung aktiviert wurde, umfasst:
Bestimmen, dass der Benutzer an keiner Kommunikationssitzung teilgenommen hat unter Verwendung der handgehaltenen Vorrichtung für zumindest die vordefinierte oder programmierbare Zeit, seit die handgehaltene Vorrichtung zuletzt aus der Transporttasche entfernt wurde.

5. Handgehaltene Vorrichtung (100), die aufweist:
eine drahtlose Kommunikationsschnittstelle (142), über die die handgehaltene Vorrichtung (100) mit einer Transporttasche (200) kommunizieren kann;
einen Prozessor (110);
einen Speicher (112); und
eine Stromquelle (154), um den Prozessor (110), den Speicher (112) und
die Kommunikationsschnittstelle (142) mit Strom zu versorgen,
wobei der Speicher (112) ausgebildet ist, ein ausführbares Code-Mittel (150) zu speichern, das bei Ausführung durch den Prozessor (110) bestimmt, in dem Fall, dass die handgehaltene Vorrichtung nicht an der Transporttasche befestigt ist, ob zumindest eine vordefinierte oder
programmierbare Zeit vergangen ist, seit die handgehaltene Vorrichtung zuletzt aus der Transporttasche entfernt wurde, ohne dass die handgehaltene Vorrichtung aktiviert wurde, und wenn dem so ist, die drahtlose Kommunikationsschnittstelle steuert, ein Signal an die Transporttasche zu senden, um zu veranlassen, dass die Transporttasche zumindest eines ihrer Benutzerschnittstellenelemente (260, 262, 264) aktiviert, um einen Benutzer über ein mögliches Risiko eines Verlierens der handgehaltenen Vorrichtung zu warnen.

6. Handgehaltene Vorrichtung gemäß Anspruch 5, die weiter aufweist eines oder mehrere Benutzerschnittstellenelement(e) (160, 162, 164, 108) und wobei das ausführbare Code-Mittel bei Ausführung durch den Prozessor eines oder mehrere der Benutzerschnittstellenelemente der handgehaltenen Vorrichtung aktiviert, um den Benutzer über das mögliche Risiko zu warnen.

7. Handgehaltene Vorrichtung gemäß Anspruch 5 oder Anspruch 6, die weiter aufweist:
einen Verbinder (158), der mit der Stromquelle verbunden ist, um die Transporttasche mit Strom zu versorgen, während die handgehaltene Vorrichtung an der Transporttasche befestigt ist.

8. Handgehaltene Vorrichtung gemäß einem der Ansprüche 5 bis 7, wobei die drahtlose Kommunikationsschnittstelle Bluetooth®-kompatibel und/oder RFID(Radio Frequency Identification)-kompatibel und/oder Zigbee™kompatibel und/oder UWB(ultra wideband)-kompatibel ist.

9. Computerprogrammprodukt für eine handgehaltene Vorrichtung (100), um zu veranlassen, dass eine Transporttasche (200) der handgehaltenen Vorrichtung einen Benutzer der handgehaltenen Vorrichtung über ein mögliches Risiko eines Verlierens der handgehaltenen Vorrichtung warnt, wobei das Computerprogrammprodukt ein computerlesbares Medium (112) aufweist, das Programmcodemittel (150) enthält, ausführbar durch einen Prozessor (110) der handgehaltenen Vorrichtung zum Implementieren des Verfahrens gemäß einem der Ansprüche 1 bis 4.

10. Drahtloses Kommunikationssystem, das eine handgehaltene Vorrichtung (100) gemäß einem der Ansprüche 5 bis 8 und eine Transporttasche (200) für die handgehaltene Vorrichtung aufweist.

## Revendications

1. Procédé destiné à avertir un utilisateur d'un dispositif portatif (100) et d'un étui de transport (200) destiné au dispositif portatif du risque potentiel de perdre le dispositif portatif, le procédé comprenant les étapes consistant à :
déterminer sur le dispositif portatif que le dispositif portatif n'est pas fixé dans l'étui de transport et qu'au moins une durée de temps, prédéterminée ou programmable, s'est écoulée depuis la dernière fois que le dispositif portatif a été retiré de l'étui de transport, sans que le dispositif portatif soit activé ; et
ensuite, émettre un signal depuis le dispositif portatif vers l'étui de transport, sur une liaison de communication sans fil, afin de commander à l'étui de transport d'activer au moins un de ses éléments d'interface avec l'utilisateur (260, 262, 264) afin d'avertir l'utilisateur du risque.

2. Procédé selon la revendication 1, comprenant en outre l'étape consistant à :
activer un élément de l'interface avec l'utilisateur (160, 162, 164, 108) sur le dispositif portatif afin d'avertir l'utilisateur du risque.

3. Procédé selon la revendication 1 ou la revendication 2, dans lequel la détermination du fait qu'au moins une durée de temps, prédéterminée ou programmable, s'est écoulée depuis que le dispositif portatif a été retiré pour la dernière fois de l'étui de transport, sans que le dispositif portatif soit activé, comprend l'étape consistant à :
déterminer qu'aucun commutateur électromécanique (104) appartenant au dispositif portatif n'a été activé au cours d'au moins la durée de temps, prédéterminée ou programmable, depuis que le dispositif portatif a été retiré pour la dernière fois de l'étui de transport.

4. Procédé selon l'une quelconque des revendications 1 à 3, dans lequel la détermination du fait qu'au moins la durée de temps, prédéterminée ou programmable, s'est écoulée depuis que le dispositif portatif a été retiré pour la dernière fois de l'étui de transport, sans que le dispositif portatif soit activé, comprend l'étape consistant à :
déterminer que l'utilisateur n'a pas participé à une session de communication en utilisant le dispositif portatif au moins au cours de la durée de temps, prédéterminée ou programmable, depuis que le dispositif portatif a été retiré pour la dernière fois de l'étui de transport.

5. Dispositif portatif (100), comprenant :
une interface de communication sans fil (142) au travers de laquelle le dispositif portatif (100) est en mesure de communiquer avec un étui de transport (200) ;
un processeur (110) ;
une mémoire (112) ; et
une source d'alimentation électrique (154) destinée à fournir une alimentation au processeur (110), à la mémoire (112) et à l'interface de communication (142) ;
dans lequel la mémoire (112) est conçue pour stocker un moyen de code exécutable (150) qui, lorsqu'il est exécuté par le processeur (110), détermine, dès lors que le dispositif portatif n'est pas fixé dans l'étui de transport, si au moins une durée de temps, prédéterminée ou programmable, s'est écoulée depuis la dernière fois que le dispositif portatif a été retiré de l'étui de transport, sans que le dispositif portatif soit activé, et, si tel est le cas, commande l'interface de communication sans fil afin d'envoyer un signal à l'étui de transport afin d'ordonner à l'étui de transport d'activer au moins un de ses éléments d'interface avec l'utilisateur (260, 262, 264) afin d'avertir l'utilisateur du risque potentiel de perte du dispositif portatif.

6. Dispositif portatif selon la revendication 5, comprenant en outre un ou plusieurs éléments d'interface avec l'utilisateur (160, 162, 164, 108) et dans lequel le moyen de code exécutable, lorsqu'il est exécuté par le processeur, active un ou plusieurs des éléments d'interface avec l'utilisateur pour avertir l'utilisateur du risque potentiel.

7. Dispositif portatif selon la revendication 5 ou la revendication 6, comprenant en outre :
un connecteur (158) couplé à la source d'alimentation électrique pour fournir une alimentation électrique à l'étui de transport lorsque le dispositif portatif est fixé dans l'étui de transport.

8. Dispositif portatif selon l'une quelconque des revendications 5 à 7, dans lequel l'interface de communication sans fil est compatible Bluetooth® et/ou compatible RFID (pour Identification par radiofréquences) et/ou compatible Zigbee™ et/ou compatible bande ultralarge (UWB pour « *Ultra Wide Band »*)*.*

9. Progiciel d'ordinateur pour un dispositif portatif (100), destiné à commander à un étui de transport (200) du dispositif portatif d'avertir un utilisateur du dispositif portatif du risque potentiel de perdre le dispositif portatif, le progiciel d'ordinateur comprenant un support lisible par ordinateur (112) matérialisant un moyen de code de programme (150) qui peut être exécuté par un processeur (110) du dispositif portatif afin de mettre en oeuvre le procédé selon l'une quelconque des revendications 1 à 4.

10. Système de communication sans fil comprenant un dispositif portatif (100) selon l'une quelconque des revendications 5 et 8 et un étui de transport (200) pour le dispositif portatif.
